# EUROPEAN PATENT APPLICATION

(11) **EP 3 342 614 A1**
(43) Date of publication of application: **04.07.2018**
(21) Application number: 16206924.9
(22) Date of filing: 27.12.2016
(51) Int. Cl.: B60K 1/02, B62D 21/11

(54) **SUBFRAME ASSEMBLY**

(71) Applicant: Volvo Car Corporation, 40 531 Göteborg (SE)
(72) Inventor: Stenvall, Mr. Lars, 45991 Ljungskile (SE); Engman, Mr. Johan, 44160 Alingsås (SE)
(74) Representative: Volvo Car Corporation

(57) **Abstract**

A subframe assembly (100) for a vehicle (1) and adapted to be assembled as a unit to a vehicle frame (2), comprising
a first and a second side member (101, 201) for disposition on left and right sides of a vehicle drive module (112), wherein the first and second side member (101, 201) are provided with attachments points (103, 203) to a vehicle frame (2) and attachment points (104, 204) to a left and right wheel suspension (150, 250), wherein
a cross member (110) interconnecting the left and right side members (101, 201), and the cross member is provided with an interior space (115) in which the vehicle drive module (112) is arranged.

## Description

### TECHNICAL FIELD

The disclosure concerns a vehicle and a subframe assembly of a vehicle and especially a subframe assembly capable of hosting a drive unit for a vehicle.

### BACKGROUND ART

New propulsion technology for vehicle especially private cars have evolved during the last decade, where the traditional combustion engine is supported or even replaced by alternative drive sources such as electric motors, giving new possibilities and demands on the arrangement of the drive sources. Especially in hybrid vehicles provided with two different propulsion devices there is a space shortage. In for example a hybrid vehicle with a combustion engine and an electric motor must be equipped with e.g. both the electric motor and batteries in addition to the traditional combustion engine. Thereto are modern vehicles full with auxiliary systems such as navigation facilities, active safety equipment and much more, where by packing space becomes a very important issue in addition to weight and fuel consumption. A high packing density in a vehicle gives more room for passenger and/or luggage compartments and low weight and which gives a lower fuel consumption, whereby the vehicles environmental strain is reduced. Hence there is a need for vehicles with a high packing density and design that enables weight reduction.

### SUMMARY OF THE INVENTION

It is an object of the disclosure to present a vehicle and a subframe assembly for a vehicle and a propulsion unit that enables a high packing density, a low weight and effective propulsion.

To a vehicle subframe is normally arranged in between the wheel suspension and the vehicle frame. The respective wheel suspension comprises normally of a plurality of wheel guiding control arms that is attached to the vehicle subframe. The vehicle subframe is thereby provided in between the left and right wheel suspension. The interfaces between both suspensions to subframe and subframe to vehicle frame may be provided with bushings to absorb vibrations from the wheel suspension and thereby prevent the vibrations to be transferred to the vehicle frame. A plurality of devices and even additional drive sources can be attached to the vehicle subframe.

The disclosure relies upon the idea more effectively use the subframe to host additional vehicle devices and especially drive sources.

One object of the disclosure is achieved by a subframe of a vehicle, which subframe is adapted to be assembled as a unit to a vehicle frame. The subframe comprises a first and a second side member for disposition on left and right sides of a vehicle drive module, wherein the first and second side members are provided with attachments points to a vehicle frame and attachment points for wheel guiding control arms of the left and right wheel suspensions, wherein a cross member connects the left and right side members. The cross member is provided with an interior space in which at least one first vehicle drive module is arranged. The interior space of the cross member is adapted to be a housing for the vehicle drive module.

The cross member can be provided with a base shape having an essentially circular cross section, wherein strengthening elements and/or cooling elements such as flanges and ribs can be provided upon the housing, which still is defined as having an essentially circular cross section. Essentially circular is defined as it must not be mathematical circular, but instead have a circular shape that can be structured by for example polygon surfaces. Alternative cross-sections geometries could also be used for the cross member, e.g. quadratic or any other multi angular form.

By providing an interior space within subframe the subframe can be used to house a drive module that can drive the vehicle alone or as a complement to a main drive source such as a combustion engine. The interface between the subframe and a vehicle frame is normally already damped against vibrations, whereby no additional dampening of the drive source would be needed. Further, in comparison with having a standard subframe and adding a drive source with its housing upon the subframe both packing volume and weight are saved.

Hence, the disclosure is based upon the finding that the housing of a vehicle drive module is rigid enough to be used as cross member in a vehicle subframe without the need for any additional struts or strengthening elements between the first and second side member of the subframe. The traditional cross member or cross members are thereby exchanged for a housing of a drive module. The housing is attached to the flanges of the left and right side member. The housing can be attached for example with a bolt, weld, shrink or form connection.

The drive module can comprise a single vehicle drive source (a first vehicle drive source) or a double vehicle drive source (a first and a second vehicle drive source). A single drive source can be arranged such that it drives on both a right a left wheel of a vehicle, for example by having a drive shaft that extends through the drive source and thereby reaching both the left and right wheel drive shaft. In an exemplary embodiment the drive source is connected to the drive shaft via a differential gear.

The drive source arranged in the housing constituted by the cross member can be any available, and for example be chosen among an electric machine, a flywheel, a hydraulic motor, a pneumatic motor, heat machines, gas turbine, a sterling motor and/or a steam motor. The housing may also be provided to host a plurality of drive sources, either of the same type of a combination of different types.

The drive module can also be arranged to comprise one or a plurality of reduction gears, such as planetary gear set, a gear step, belt drive, a strain wave gear and/or a continuously variable variator in order to achieve the right output speed and torque.

The first and second side members of the subframe assembly connects to the cross member over a first and second connection flange respectively, which are provided with an opening enabling a connection of the drive module to a first and second wheel drive shaft.

A first and second wheel suspension can be connected to the first and second side member respectively either before or after mounting the sub assembly to a vehicle frame.

The first and second side member of the subframe assembly comprises attachment points adapted to attach the vehicle subframe to a vehicle frame.

The attachment points are adapted to isolate the vehicle frame from vibrations from both the vehicle wheel suspension and the vehicle drive module.

A blade spring that connects the first and second wheel suspension can be provided, wherein the blade spring further is connected to both of the first and second side members of the subframe assembly.

### BRIEF DESCRIPTION OF THE DRAWINGS

Figure 1 discloses a schematic view of a vehicle.
Figure 2 discloses a schematic view of a subframe assembly.
Figure 3a, b and c discloses schematic views of embodiments of the subframe assembly.

### DETAILED DESCRIPTION

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure. All drawings are schematic.

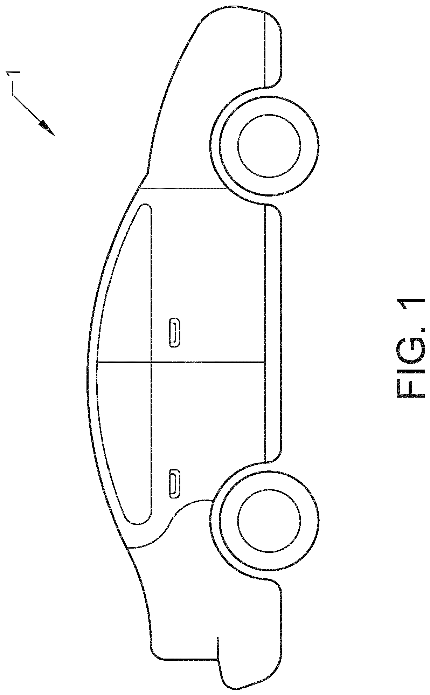

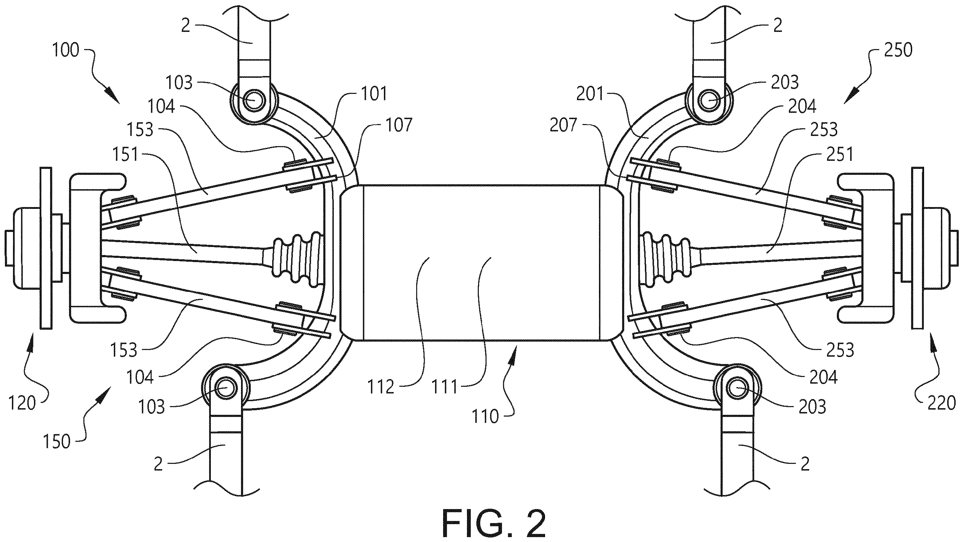

Figure 1 discloses a schematic view of a vehicle 1 which may be provided with a subframe assembly 100. In figure 2 an exemplary embodiment of the subframe assembly 100 is disclosed, the subframe assembly 100 comprises a first and second side member 101, 201 for disposition on the left and right sides of a drive module 112 of the vehicle 1. First and second side member 101, 201 are provided with attachment points 103, 203 to a vehicle frame 2 and attachment points 104, 204 to the left and right wheel suspension 150, 250.

A cross member 110 connects the left and right side members 101, 201. The cross member 110 forms together with the left and right side members 101, 201 the subframe assembly 100. The cross member 110 is a stiff connection using the strength of the drive module housing 111 in order to connect the left and right side members 101, 201. Especially a housing 111 for an electrical machine is already design with a high strength in order to withstand the high magnetic forces between the rotor and the stator of the electrical machine. The suggested cross member 110 uses the existing strength in the housing 111 of a drive module 112 in order to reduce the total weight and spaces needed for the drive module 112 and the vehicle subframe 100.

The cross member 110 is provided with an interior space in which at least one first vehicle drive module 112 is provided. As later will be discussed the interior space 115 could house additional drive modules 113a, 113b and when needed one or a plurality of reduction gears 114. In exemplary embodiments the drive module 112 is further connected to a differential gear 180 in order to distribute the power between the left and right drive wheel 120, 220.

The cross member 110 is rigid in order to facilitate a rigid connection between the left and right side member 101, 201. A housing for a vehicle drive module 112 might become general larger than a traditional cross members constructed of one or a plurality of struts and/or bars. However by designing the cross member 110 as a housing for a vehicle drive module 112 the cross member 110 will have more than sufficient strength to withstand the forces in the subframe assembly 100 and enables an integration of a drive module 112 within the subframe assembly 100 with lesser space usage than if the housing would be designed as a separate part provided upon a subframe assembly.

Hence, the cross member 110 and thereby the housing acts a force bridge between the left and right 101, 201 side members.

Both the left and right side members 101, 201 are provided with attachment points 103, 203 for attaching the subframe assembly to a vehicle frame 2. In the figure 2 two vehicle frame attachments points 103, 203 are disclosed on the left and right side member 101, 201 respectively, this is only a schematic view and additional vehicle frame attachment points 103, 203 may be provided upon the left and right side member 101, 201. The attachment points 103, 203 may be provided with vibration dampers, i.e. bushings that absorb the vibrations from the subframe assembly 100 to the vehicle frame 2. The same bushings can absorb any vibrations from the vehicle drive module 112.

Both the left and right side members 101, 201 are provided with attachment points 104, 204 for a left and right wheel suspension 150, 250 of a left and right wheel 120, 220. The exemplary left and right wheel suspension 121 comprises a plurality of wheel guiding control arms 153, 253. In the figure 2 two wheel guiding control arms 153, 253 are disclosed on the left and right side member 101, 201 respectively, this is only a schematic view and additional attachment points 104, 204 for wheel guiding control arms 153, 253 may be provided upon the left and right side member 101, 201. The attachment points 104, 204 for the left and right wheel suspension 150, 250 may be provided with vibration dampers, i.e. bushings that absorb the vibrations from the vehicle suspension 150, 250 such that they are not transferred to the vehicle subframe 100.

Both the left and right side members 101, 201 are provided with flanges 107, 207, which connects to the respective end of the essentially cylindrical the housing 111. The flanges 107, 207 as well as the housing 111 are provided with openings 117, 217 to allow the drive shafts 151, 152 of the left and right wheel to connect to the drive sources 112, 113a, 113b.

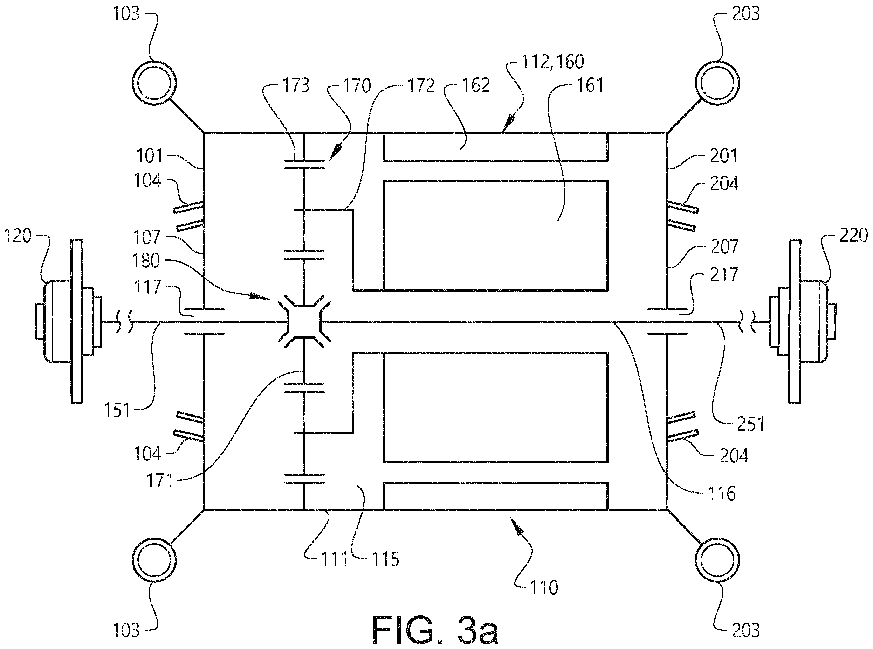

In figure 3a an exemplary embodiment where the vehicle drive module 112 comprises an electric machine 160, a planetary gear set 170 and a drive axel 116 extending through the rotor 161 of the electric machine 160 in order to be in connection to both the left and right drive axle 151, 251 drive wheels 120, 121. The rotor 161 of the electric machine 160 is connected to the planet carrier 172 of the planetary gear set 170. The drive axle 116 is connected to the sun gear 171 of the planetary gear set 170 and the housing 111 of the vehicle drive module 112 is connected to the internal gear 173 of the planetary gear set 170. The stator 162 of the electric machine 160 is stationary attached to the housing 111 of the drive module 112.

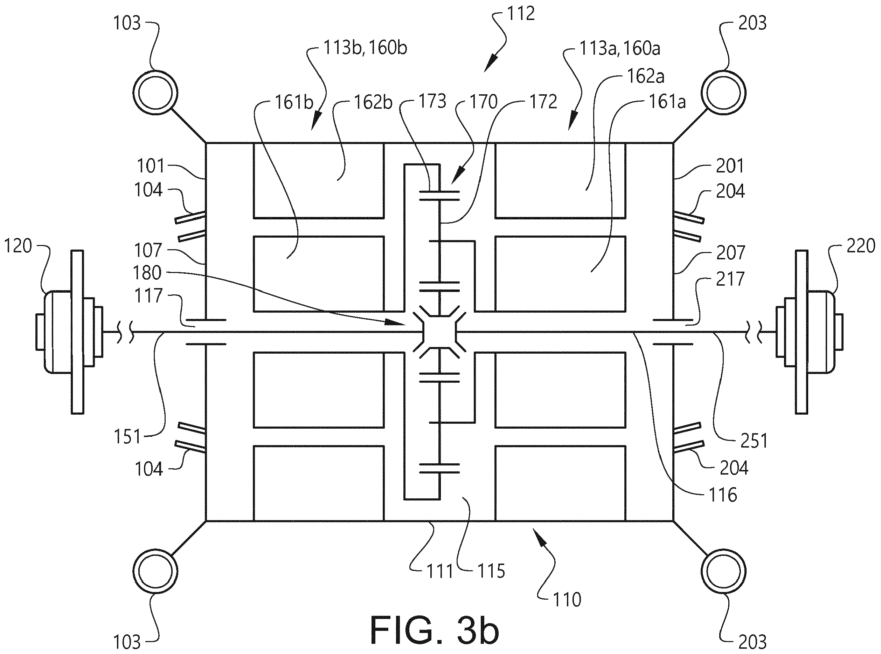

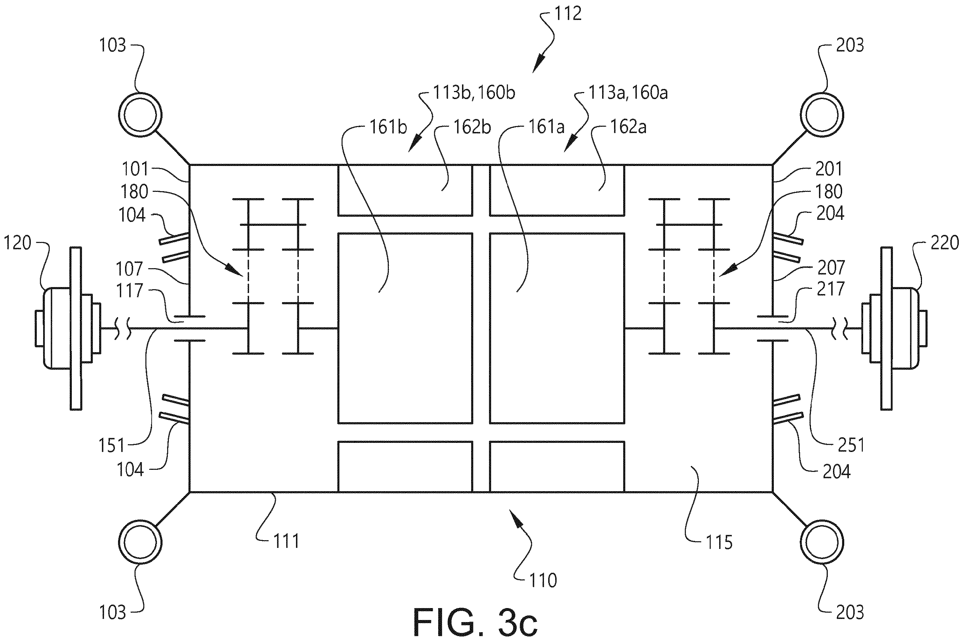

In figure 3b an exemplary embodiment is disclosed where the vehicle drive module 112 comprises a first and a second drive source 113a, 113b, which are connected to the same drive axle 116 over a planetary gear set 170. In comparison with the embodiment disclosed in figure 3c is only an additional electric machine 160b added, whereby the rotor 161b of the additional electric machine 160b is connected to the internal gear 173 of the planetary gear set 170.

In figure 3c an exemplary embodiment is disclosed where the vehicle drive module 112 comprises a first and a second drive source 113a, 113b and the respective drive source 113a, 113b are connected to respective drive axel 151, 152 over a reduction gears 180. The reduction gears 180 are only disclosed as a general reduction gear, whereby any suitable reduction gear could be used. By connecting the two drive sources 113a, 113b to an individual drive axle 151, 152 an individual control of the speed and torque output to the drive wheels 120, 220 can be achieved.

In the exemplary embodiments disclosed in figure 3a and figure 3b the sun wheel 171 is connected to the drive axle 116 via a differential gear 180.

In the exemplary embodiments disclosed in figure 3a, b, c the drive sources 112, 113a, 113b have been shown as electric machines, any suitable other drive sources would however be possible to use in the subframe assembly. Exemplary drive sources are electric machines, flywheels, hydraulic motors, pneumatic motors, heat machines, gas turbines, sterling motors and/or steam motors.

In the exemplary embodiment disclosed in figure 3b two different kinds of drive sources 113a, 113b could be used in order to take advantages of the different characteristics of the drive sources. Non-limiting exemplary combinations are electric motor and fly wheel or pneumatic motor and sterling motor.

In the exemplary embodiments disclosed in figure 3a and b, a reduction gear mechanism is shown in form of a planetary gear set 170 and in figure 3c as a general reduction gear 180. In the applications of the subframe assembly 100 any reduction gear may be used. Exemplary reduction gears are planetary gear sets, conventional gear steps, belt drives, strain wave gears and/or a continuously variable variators.

## Claims

1. A subframe assembly (100) for a vehicle (1) and adapted to be assembled as a unit to a vehicle frame (2), comprising
a first and a second side member (101, 201) for disposition on left and right sides of a vehicle drive module (112), wherein the first and second side member (101, 201) are provided with attachments points (103, 203) to a vehicle frame (2) and attachment points (104, 204) to a left and right wheel suspension (150, 250), wherein
a cross member (110) interconnecting the left and right side members (101, 201), **characterized in that** the cross member (110) is provided with an interior space (115) in which the vehicle drive module (112) is arranged.

2. The subframe assembly (100) of claim 1, wherein the drive module (112) comprises a first and/or second vehicle drive sources (113a, 113b).

3. The subframe assembly (100) of claim 1 or 2, wherein the drive module (112) comprises at least one of an electric machine, a flywheel, a hydraulic motor, a pneumatic motor, heat machines, gas turbine, a sterling motor and/or a steam motor.

4. The subframe assembly (100) of any of the preceding claims, wherein the drive module (112) comprises a reduction gear (114).

5. The subframe assembly (100) of claim 4, wherein the reduction gear (114) is any one of a planetary gear set, a gear step, belt drive, a strain wave gear and/or a continuously variable variator.

6. The subframe assembly (100) of any of the preceding claims, wherein said first and second side members (101, 201) connects to the cross member (110) over first and second connections flanges (107, 207) respectively and an opening (117, 217) is provided in respective flange (107, 108) enabling a connection of said at drive module (112) to a first and second wheel drive shaft (105, 205).

7. The subframe assembly (100) of any of the preceding claims, wherein a first and second wheel suspension (150) are connected to the first and second side member (101, 102) respectively.

8. The subframe assembly (100) of claim 8, wherein the attachment points (10) are adapted to isolate the vehicle frame (2) from vibrations from both the vehicle wheel suspension (150, 250) and the vehicle drive module (112).

9. The subframe assembly (100) of any of the preceding claims, wherein a blade spring connects the first and second wheel suspension (150, 250) and the blade spring (151) further is connected to both of the first and second side members (101, 201).

10. Vehicle provided with a vehicle subframe assembly (100) according to any of the preceding claims 1-9.
